# EUROPEAN PATENT SPECIFICATION

(11) **EP 2 679 947 B1**
(45) Date of publication and mention of the grant of the patent: **20.06.2018**
(21) Application number: 13186014.0
(22) Date of filing: 29.04.2009
(51) Int. Cl.: F41H 5/04, B32B 7/02, B32B 5/26, B32B 27/02, B32B 27/32, B32B 15/14, B32B 15/08

(54) **STACK OF FIRST AND SECOND LAYERS, A PANEL AND A BALLISTIC RESISTANT ARTICLE COMPRISING THE STACK OR PANEL**
STAPEL ERSTER UND ZWEITER SCHICHTEN, PANEEL UND BESCHUSSFESTER ARTIKEL UMFASSEND DEN STAPEL ODER DAS PANEEL
PILE DE PREMIÈRES ET SECONDES COUCHES, PANNEAU ET OBJET PARE-BALLES COMPRENANT LA PILE OU LE PANNEAU

(30) Priority: 29.04.2008 EP 08008166
(43) Date of publication of application: 01.01.2014
(62) Divisional of application: 09738194.1
(73) Proprietor: DSM IP Assets B.V., 6411 TE Heerlen (NL)
(72) Inventor: Jongedijk, Marcel, 6100AA ECHT (NL); Es, Van, Martin Antonius, 6100 AA ECHT (NL); Putten, Van, Koen, 6100AA ECHT (NL)
(74) Representative: DSM Intellectual Property

(56) References cited:
- EP-A1- 1 445 094
- EP-A1- 1 627 719
- EP-A2- 0 678 607
- WO-A1-2006/136323
- WO-A1-2008/040506
- WO-A1-2009/047239
- WO-A2-2009/008922

## Description

The invention relates to a panel comprising a consolidated stack of first and second layers and to a ballistic resistant article comprising said panel, as defined in the claims. A consolidated stack of first layers of drawn polymeric fibers is known from US 6,893,704B1. This publication discloses a stack comprising a plurality of layers consisting of ultra high molecular weight polyethylene fibers in parallel orientation embedded in a bonding matrix, whereby the draw direction or orientation of the fibers in two subsequent layers in the stack differs. The stack is used to prepare a panel by compressing, a so-called hard ballistic resistant article.

A satisfactory hard ballistic resistant article needs to combine a high stiffness with a good energy absorbing ability. High stiffness often is of advantage to reduce so-called (blunt) trauma resulting from an impact of an object. The stiffness and energy absorbing requirements are to some extent contradictory, in that optimizing one may and usually will go at the detriment of the other. It would be highly desirable to provide a (consolidated) stack and a ballistic resistant article thereof, which combine both requirements.

Although the stack according to US 6,893,704B1 shows a satisfactory ballistic performance, this performance can be improved further.

WO2006/136323 describes a trauma pack, for use behind ballistic resistant layers, comprising panels of strips of polyolefin material and a layer of ballistic resistant fabric, for example Twaron®, polyaramid.

WO2008/040506 describes a panel which is a laminate of unidirectionally aligned polymeric tapes. Said tapes have a core and sheath structure and may be, for example, polyethylene.

The object of the present invention is to provide a consolidated stack having at least similar antiballistic properties as the known material, and which consolidated stack can be readily produced.

This object is achieved by providing a stack comprising first and second layers, whereby the first layers comprise drawn polymeric fibers and optionally a binder, and the second layers comprise drawn polymeric tapes.

Combining both types of layers into a stack and consolidating the stack, surprisingly yields a panel, also called sheet, with a combined adequate or improved level of energy absorption and stiffness. In specific embodiments of the present invention, elucidated further below, the stack according to the invention improves the antiballistic properties of the sheet to an unexpectedly high extent when compared to the state of the art. This is believed to be due to a synergistic effect between the first and second layers.

A first layer of the stack is preferably produced by positioning a plurality of drawn polymeric fibers in parallel orientation on a suitable surface and holding the fibers together e.g. by embedding the fibers in a suitable matrix material. Another method for preparing a first layer is to simultaneously pull a plurality of fibers closely positioned in parallel orientation through a suitable matrix material and to lay the fibers on a suitable surface. To promote wetting of the fibers, the viscosity of the matrix material may be lowered by heating, or by adding solvents. In the latter case, evaporation of solvents leaves a first layer, which can be used for further processing.

A second layer of the stack is preferably produced by positioning a plurality of drawn polymeric tapes in parallel orientation with their longitudinal edges as close as possible to each other, and preferably in touching proximity. However, in order to be able to produce such second layer on an industrial scale at economical speeds, it is also possible to allow a gap between adjacent tapes, such a gap preferably is less then 2 mm. Another option is to allow a partial overlap along the longitudinal edges. Still another possibility is to position a thin polymeric film over the tapes to produce a coherent second layer. Suitable films are polyolefin, preferably polyethylene films, with a thickness of 5-15 micron. Although a second layer is preferably produced by positioning a plurality of tapes with their longitudinal edges against each other, second layers built from just one (wide enough) tape of sufficient width may also be employed, as long as the tape or film does have the required mechanical properties as mentioned later on. In another preferred embodiment, the second layer may comprise tapes woven into a tape woven structure, instead of parallel orientation.

The tapes of the second layer may be prepared by drawing films. Films may be prepared by feeding a polymeric powder between a combination of endless belts, compression-moulding the polymeric powder at a temperature below the melting point thereof and rolling the resultant compression-moulded polymer thereby forming a film. Another preferred process for the formation of films comprises feeding a polymer to an extruder, extruding a film at a temperature above the melting point thereof and drawing the extruded polymer film. If desired, prior to feeding the polymer to the extruder, the polymer may be mixed with a suitable liquid organic compound, for instance to form a gel, such as is preferably the case when using ultra high molecular weight polyethylene. Drawing, preferably uniaxial drawing, of the films to produce tapes may be carried out by means known in the art. Such means comprise extrusion stretching and tensile stretching on suitable drawing units. To attain increased mechanical strength and stiffness, drawing may be carried out in multiple steps. The resulting drawn tapes may be used as such to produce said second layer, or they may be cut to their desired width, or split along the direction of drawing. Preferably the said second layer is produced from tape that is not slitted. This results in less handling steps during manufacture. The width of the thus produced unidirectional tapes is only limited by the width of the film from which they are produced. The width of the tapes preferably is more than 2 mm, more preferably more than 5 mm and most preferably more than 30 mm. The areal density of the tapes or layers can be varied over a large range, for instance between 5 and 200 g/m². Preferred areal density is between 10 and 120 g/m², more preferred between 15 and 80 g/m² and most preferred between 20 and 60 g/m².

In the event that the first or second layer comprises fibers or tapes respectively, in parallel orientation - also called unidirectional alignment - in a preferred embodiment of the stack the draw direction (i.e. the orientation of the fibers and tapes respectively) of two subsequent or adjacent first and/or second layers in the stack differs. This improves antiballistic properties further. More preferred is a multilayered material sheet, whereby the draw direction of two subsequent first and/or second layers in the stack differs by an angle of between 20° and 160°, still more preferred between 40° and 140° and most preferred between 70° and 110°. An assembly of two first or two second adjacently positioned layers in which the draw direction of the two layers differs by an angle of about 90° is usually referred to as a cross-ply. Constructing a stack using such cross-plies is advantageously with respect to production speed. According to the invention, at least one of the first and/or second layers comprises a woven fabric of the drawn polymeric fibers and/or the drawn polymeric tapes respectively. In such a preferred embodiment, the first layers are possibly built up of a plurality of drawn polymeric fibers aligned such that they form a woven structure, while the second layers are possibly also built up of a plurality of drawn polymeric tapes aligned such that they form a woven structure. Such woven fabric as first and/or second layers may be manufactured by applying textile techniques, such as weaving, braiding, etc. of fibers (for the first layer) or small strips of drawn polymer (for the second layer). Especially second layers are preferably stacked such that tapes from adjacent layers do not project on each other, but rather that the seam lines between different tapes are staggered with respect to each other, whereby antiballistic properties are further improved.

The first and second layers may in principle be arranged in any stacking order. It is for instance possible to arrange them in the stack in an alternating fashion.

In a preferred embodiment, the stack is characterized in that a number of the first and/or second layers is clustered. Such a configuration is easily produced and yields improved antiballistic properties. More preferably, the stack comprises at least 20% of the total areal density of the first and/or second layers in a clustered configuration, still more preferably at least 50% of the total areal density of the first and/or second layers, and most preferably at least 95% of the total areal density of the first and/or second layers. Particularly the last embodiment yields a good combination of antiballistic properties and reduced trauma due to stiffness improvement. According to the invention, the total areal density of second layers is between 1% and 50% of the total areal density of the stack. Particularly good antiballistic properties are achieved with a stack wherein the total areal density of second layers is between 3% and 30% and preferably between 5% and 20% of the total areal density of the multilayered material sheet. The areal density of a material sheet is defined as its weight per square meter.

The total number of first and second layers in the stack depends on the application, but advantageously is at least 2, preferably at least 10 and most preferably at least 25. These preferred embodiments provide a strong and stiff multilayered material sheet, which is moreover lightweight. Low weight offers comfort to human users. Preferably, the fibers of the first layers are manufactured from a polymer selected from the group consisting of polyolefins, polyesters, polyvinyl alcohols, polyacrylonitriles, polyamides, especially poly(p-phenylene terephthalamide), liquid crystalline polymers and ladder-like polymers, such as polybenzimidazole or polybenzoxazole, especially poly(1,4-phenylene-2,6-benzobisoxazole), or poly(2,6-diimidazo[4,5-b-4',5'-e]pyridinylene-1,4-(2,5-dihydroxy)phenylene), and the polymer of the second layers is selected from the group consisting of polyolefins, polyesters, polyvinyl alcohols, polyacrylonitriles, and polyamides. Tapes, fibers and layers from these polymers are preferably highly oriented by drawing, for instance films, tapes or fibers at a suitable temperature, to obtain a unidirectional material. With unidirectional tapes, fibers and layers is meant in the context of this application that the tapes, fibers and layers exhibit a preferred orientation of the polymer chains in one direction, i.e. in the direction of drawing. Such films, tapes, fibers and layers may be produced by drawing, preferably by uniaxial drawing, and will exhibit anisotropic mechanical properties.

A preferred embodiment of the stack comprises first and/or second layers of ultra high molecular weight polyethylene (UHMWPE), i.e. the fibers and/or the tapes contained in said layers are manufactured from UHMWPE. The UHMWPE may be linear or branched, although preferably linear polyethylene is used. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR on a 2 mm thick compression moulded film, as mentioned in e.g. EP 0269151. The linear polyethylene may further contain up to 5 mol% of one or more other alkenes that are copolymerisable therewith, such as propene, butene, pentene, 4-methylpentene, octene. Preferably, the linear polyethylene is of high molar mass with an intrinsic viscosity (IV, as determined on solutions in decalin at 135°C) of at least 4 dl/g; more preferably of at least 8 dl/g, most preferably of at least 10 dl/g. Such polyethylene is also referred to as UHMWPE. Intrinsic viscosity is a measure for molecular weight that can more easily be determined than actual molar mass parameters like Mn and Mw. Using UHMWPE fibers and/or tapes yields particularly good antiballistic properties.

Preferably UHMWPE fibers are used, of which the filaments are prepared by a gel spinning process. A suitable gel spinning process is described in for example GB-A-2042414, GB-A-2051667, EP 0205960 A and WO 01/73173 A1, and in "Advanced Fiber Spinning Technology", Ed. T. Nakajima, Woodhead Publ. Ltd (1994), ISBN 185573 182 7. Tensile strength (or tenacity) of the UHMWPE fibers may be determined according to ASTM D885M applied on multifilament yarns. In short, the gel spinning process comprises preparing a solution of a polyolefin of high intrinsic viscosity, spinning the solution into filaments at a temperature above the dissolving temperature, cooling down the filaments below the gelling temperature, thereby at least partly gelling the filaments, and drawing the filaments before, during and/or after at least partial removal of the solvent.

In some embodiments the first and/or second layer may include a binder, which is locally applied to bond and stabilise the plurality of unidirectional fibers and/or tapes such that the structure of the first and/or second layer is retained during handling and making of such first and/or second layers. Suitable binders, often also referred to as matrix, are described in e.g. EP 0191306 B1, EP 1170925 A1, EP 0683374 B1 and EP 1144740 A1. The binder may be applied in various forms and ways; for example as a transverse bonding strip (transverse with respect to the unidirectional oriented fibers or tapes). The application of the binder during the formation of the second layer advantageously stabilises the tapes, thus enabling faster production cycles to be achieved while avoiding overlaps between adjacent tapes. As the role of the binder is to temporarily retain and stabilise the plurality unidirectional tapes during handling and making of unidirectional sheets, localised application of the binder is preferred. In alternative embodiments, a binding means, such as local welding may be used to intermittently fuse sections of the longitudinal edges of the adjacent unidirectional tapes together, such that the adjacent unidirectional tapes are maintained in a parallel orientation.

The thickness of the first and/or second layers of the stack can in principle be selected within wide ranges. Preferably however, the stack is characterized in that the thickness of at least one first and/or second layer, and preferably substantially all, does not exceed 120 µm, more preferably does not exceed 50 µm, and most preferably does not exceed 29 µm. By limiting the thickness of at least one of the first and/or second layers in the stack to the claimed thickness, sufficient antiballistic properties are surprisingly achieved even with layers having rather limited strengths.

The strength of the fibers in the first layers depends on their (uniaxial) stretch ratio. The strength of the fibers is at least 0.75 GPa, preferably at least 0.9 GPa, more preferably at least 1.2 GPa, even more preferably at least 1.5 GPa, even more preferably at least 1.8 GPa, and even more preferably at least 2.1 GPa, and most preferably at least 3 GPa. The strength of the fibers may be determined according to any known method in the art, e.g. ASTM D2256-02(2008).The strength of the first layers depends on the volume fraction of the fibers within the first layers. The volume fraction of the fibers in the first layers is preferably between 70% and 98%, more preferably between 80% and 95% and most preferably between 85% and 92%, the remaining volume containing binder and/or other commonly used additives.

The strength of the tapes in the second layer depends on their (uniaxial) stretch ratio. The strength of the tapes (and second layers) is at least 0.75 GPa, preferably at least 0.9 GPa, more preferably at least 1.2 GPa, even more preferably at least 1.5 GPa, even more preferably at least 1.8 GPa, and even more preferably at least 2.1 GPa, and most preferably at least 3 GPa. The strength of the tapes may be determined according to any known method in the art, e.g. by puling an e.g. 25 cm long tape clamped in barrel clamps at a rate of e.g. 25 cm/min on an Instron Tensile Tester. The unidirectional layers are preferably sufficiently interconnected to each other, meaning that the unidirectional layers do not delaminate under normal use conditions such as e.g. at room temperature.

The stack is particularly useful in manufacturing hard ballistic resistant articles, such as armoured plates or panels, e.g. by consolidating through compressing. Ballistic applications comprise applications with ballistic threat against projectiles of several kinds including bullets and hard particles such as e.g. fragments and shrapnel.

In a preferred embodiment of the ballistic resistant article comprising a panel according to the invention, a number of second layers of the stack is clustered whereby the cluster of second layers is positioned at the outside of the stack or panel at least at the strike face thereof. More preferably, at least 20%, even more preferably at least 50%, and most preferably at least 95% of the total areal density of the second layers of the stack is clustered, whereby the cluster of second layers is positioned at the outside of the stack at least at the strike face thereof. A ballistic resistant article or panel with these technical measures shows improved energy absorption and increased stiffness.

The ballistic resistant article according to the invention may comprise a further sheet of inorganic material selected from the group consisting of ceramic; metal, preferably aluminum, magnesium titanium, nickel, chromium and iron or their alloys; glass; graphite, or combinations thereof. Particularly preferred is metal. In such case the metal in the metal sheet preferably has a melting point of at least 350 °C, more preferably at least 500 °C, most preferably at least 600 °C. Suitable metals include aluminum, magnesium, titanium, copper, nickel, chromium, beryllium, iron and copper including their alloys as e.g. steel and stainless steel and alloys of aluminum with magnesium (so-called aluminum 5000 series), and alloys of aluminum with zinc and magnesium or with zinc, magnesium and copper (so-called aluminum 7000 series). In said alloys the amount of e.g. aluminum, magnesium, titanium and iron preferably is at least 50 wt%. Preferred metal sheets comprising aluminum, magnesium, titanium, nickel, chromium, beryllium, iron including their alloys. More preferably the metal sheet is based on aluminum, magnesium, titanium, nickel, chromium, iron and their alloys. This results in a light antiballistic article with a good durability. Even more preferably the iron and its alloys in the metal sheet have a Brinell hardness of at least 500. Most preferably the metal sheet is based on aluminum, magnesium, titanium, and their alloys. This results in the lightest antiballistic article with the highest durability. Durability in this application means the lifetime of a composite under conditions of exposure to heat, moisture, light and UV radiation. Although the further sheet of inorganic material may be positioned anywhere in the stack of layers, the preferred ballistic resistant article is characterized in that the further sheet of inorganic material is positioned at the outside of the stack or panel with first and second layers, most preferably at least at the strike face thereof.

The thickness of the inorganic sheet can vary within wide ranges and is preferably between 1 mm and 50 mm, more preferably between 2 mm and 30 mm.

It is preferred to position the further sheet of inorganic material at the outside of the stack at least at the strike face thereof. Such an inorganic sheet at the strike face of the ballistic resistant article provides additional protection to ballistic threats, especially against so-called armor piercing ('AP') threats or bullets. The further sheet of inorganic material may optionally be pre-treated in order to improve adhesion with the (consolidated) stack. Suitable pre-treatment of the further sheet includes mechanical treatment e.g. roughening or cleaning the surface thereof by sanding or grinding, chemical etching with e.g. nitric acid and laminating with polyethylene film.

In another embodiment of the ballistic resistant article a bonding layer, e.g. an adhesive, may be applied between the further sheet and the stack or panel. Such adhesive may comprise an epoxy resin, a polyester resin, a polyurethane resin or a vinylester resin. In another preferred embodiment, the bonding layer may further comprise a woven or non woven layer of inorganic fiber, for instance glass fiber or carbon fiber. It is also possible to attach the further sheet to the stack or panel by mechanical means, such as e.g. screws, bolts and snap fits. In the event that the ballistic resistant article according to the invention is used in ballistic applications where a threat against AP bullets, fragments or improvised explosive devices may be encountered the further sheet is preferably comprises a metal sheet covered with a ceramic layer. In this way an antiballistic article is obtained with a layered structure as follows (starting from the strike face): ceramic layer/metal sheet/first and second layers. Suitable ceramic materials include e.g. alumina oxide, titanium oxide, silicium oxide, silicium carbide and boron carbide. The thickness of the sheet of the inorganic layer and in particular the thickness of the ceramic layer depends on the level of ballistic threat but generally varies between 2 mm and 30 mm.

A process for the manufacture of a ballistic resistant article, in particular a panel, comprises: (a) stacking a plurality of first and second layers; and (b) consolidating the stacked layers under temperature and pressure to form a panel. Preferably a further sheet of material selected from the group consisting of ceramic, steel, aluminum, titanium, glass and graphite, or combinations thereof is assembled with the preferably consolidated stack of first and second layers.

In a preferred embodiment there is provided a process for the manufacture of a ballistic resistant article comprising (a) stacking a plurality of first and second layers, whereby at least 95% of the first and second layers are clustered, whereby preferably the cluster of second layers is positioned at the outside of the stack, at least at the intended strike face thereof, and (b) consolidating the stacked first and second layers under temperature and pressure.

In an alternative process a consolidated 2- or 4-layered stack of first and/or second layers is used to build the stack.

Consolidation for all processes described above may suitably be done in a hydraulic press. Consolidation is intended to mean that the first and second layers are relatively firmly attached to one another to form one unit. The temperature during consolidating generally is controlled through the temperature of the press. A minimum temperature generally is chosen such that a reasonable speed of consolidation is obtained. In this respect 80 °C is a suitable lower temperature limit, preferably this lower limit is at least 100 °C, more preferably at least 120 °C, most preferably at least 140 °C. A maximum temperature is chosen below the temperature at which the drawn polymer of the first and second layers loses its high mechanical properties due to e.g. melting. Preferably the temperature is at least 10 °C, preferably at least 15 °C and even more at least 20 °C below the melting temperature of the drawn polymer layer. In case the drawn polymer in the first and second layer does not exhibit a clear melting temperature, the temperature at which the drawn polymer layer starts to lose its mechanical properties should be read instead of melting temperature. In the case of the preferred ultra high molecular weight polyethylene, a temperature below 145 °C generally will be chosen.

The pressure during consolidating preferably is at least 7 MPa, more preferably at least 15 MPa, even more preferably at least 20 MPa and most preferably at least 35 MPa. In this way a rigid antiballistic article is obtained. The optimum time for consolidation generally ranges from 5 to 120 minutes, depending on conditions such as temperature, pressure and part thickness and can be verified through routine experimentation. In the event that curved antiballistic articles are to be produced it may be advantageous to first pre-shape the further sheet of material into the desired shape, followed by consolidating with the first and second layers.

Preferably, in order to attain a high ballistic resistance, cooling after compression moulding at high temperature is carried out under pressure as well. Pressure is preferably maintained at least until the temperature is sufficiently low, e.g. 80 °C or less, to prevent relaxation. This temperature can be established by one skilled in the art. When a ballistic resistant article comprising layers of ultra high molecular weight polyethylene is manufactured, typical compression temperatures range from 90 to 150 °C, preferably from 115 to 130 °C. Typical compression pressures range between 100 to 300 bar, preferably 100 to 180 bar, more preferably 120 to 160 bar, whereas compression times are typically between 40 to 180 minutes.

The panel and ballistic resistant article of the present invention are particularly advantageous over previously known antiballistic materials as they provide at least the same level of protection as the known articles at a significantly lower weight, or an improved ballistic performance at equal weight compared with the known article. Starting materials are inexpensive and the manufacturing process is relatively short and thus cost effective. This disclosure will now be explained in greater detail by means of the enclosed figures, without however being limited thereto.

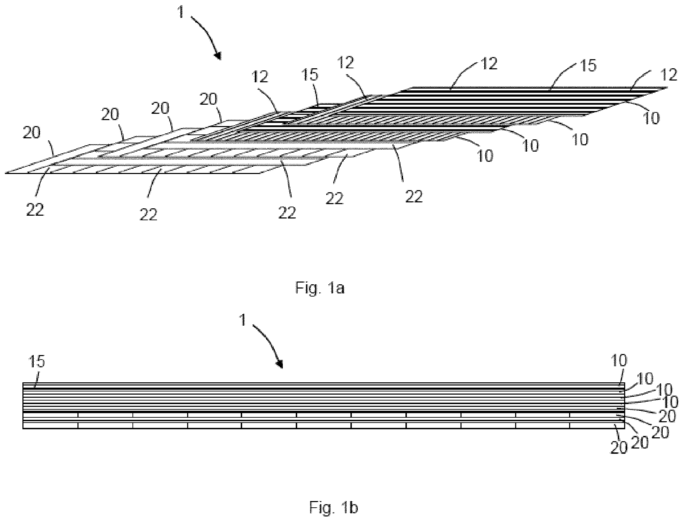

In the figures:
Figure 1a represents a schematic exploded view of an embodiment of the stack according to the present disclosure;
Figure 1b represents a schematic cross-section of a consolidated stack shown in figure 1a;
Figure 2 represents a schematic exploded view of another embodiment of the stack according to the present disclosure;
Figure 3 represents a schematic cross-section of a ballistic resistant article according to the present disclosure, whereby about 50% of the first and second layers are clustered;
Referring to figure 1a, a stack (1) comprises 4 first layers (10) and 4 second layers (20). First layers (10) comprise a plurality of parallel arranged drawn polymeric fibers (12), embedded in a matrix (15). Second layers (20) comprise a plurality of parallel arranged drawn polymeric tapes (22). The draw direction of two adjacently positioned first and second layers (10, 20) differs by an angle of 90°. After positioning a plurality of layers (10, 20) in the preferred sequence, the thus formed stack is consolidated under pressure and at elevated temperature. The result is a consolidated stack-or panel (1), of which a cross-section is shown in figure 1b.

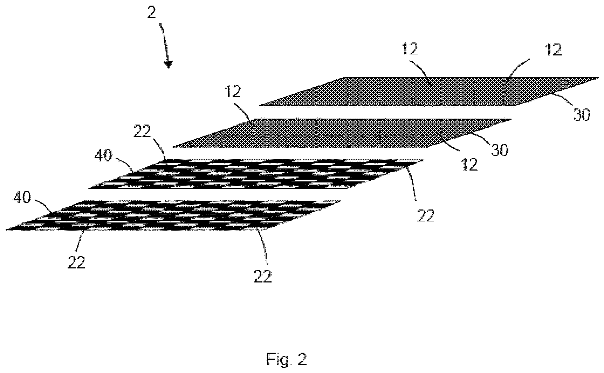

With reference to figure 2, another embodiment of a stack (2) is shown. The stack 2 comprises two first layers (30) and two second layers (40). First layers (30) comprise a woven structure of drawn fibers (12), while second layers (40) comprise a woven structure of tapes (22). Layers (30) and (40) are stacked and may be consolidated to form a panel, as described above.

Another preferred embodiment relates to a stack comprising first layers (10) comprising fibers in parallel orientation whereby subsequent layers are crossplied - as described by (10) for fig 1 and second layers comprising woven tapes - as described by (40) for fig 2.

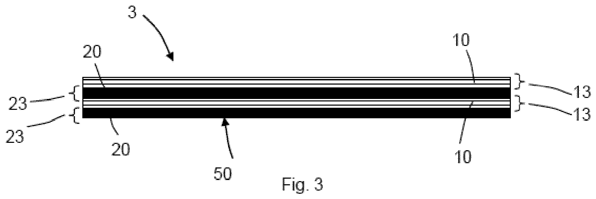

With reference to figure 3, still another embodiment of a stack (3) is shown. The stack (3) comprises a consolidated number of first and second layers (10, 20), whereby about 50% of the aerial density of first and second layers is clustered. In the specific embodiment shown, two clusters (13) are formed by a number of adjacently positioned first layers (10) and two clusters (23) are formed by a number of adjacently positioned second layers (20). The present embodiment of the multilayered sheet is particularly useful as a ballistic resistant article. A particularly favourable combination of properties is obtained when a cluster (23) is positioned at the strike face (50) of the ballistic article or panel.

The present invention will now be further elucidated by the following example and comparative experiment, without being limited thereto.

### Example I

Consolidated panels comprising first and second layers were prepared. The areal density (the mass per square meter of multilayered material sheet) of the panels was 21 kg/m². The percentage of second layers (defined as areal density of second layers / areal density of the sheet x100%) was 10%. The stacks were built up by stacking 72 layers of Dyneema® HB26 (comprising cross plied layers of unidirectionally oriented polyethylene fibers having a strength of 3.5 GPa and a matrix: first layers) and tape woven layers of drawn ultra high molecular weight polyethylene tapes having a strength of 1.8GPa (second layers). A number of cross-plied first layers and woven second layers were stacked as indicated in Table 1. First and second layers were clustered in two substacks, whereby the cluster of second layers was positioned at the strike face (as shown in figure 3). Consolidation was performed under a pressure of 165 bar, and at a temperature of 130°C during 35 min. The consolidated sheets were cooled under pressure.

### Example II

Example I was repeated with the exception that 64 cross-plies of first layers and 41 second layers were used to build the stack, yielding to a percentage of second layers in the stack of 20%.

### Example III

Example I was repeated with the exception that 40 cross-plies of first layers and 102 second layers were used to build the stack, yielding to a percentage of second layers in the stack of 50%.

### Comparative Experiment A

A consolidated stack was prepared in the same way as described above, the only difference being that the stack was made with first layers only (only comprising Dyneema® HB26; 0% of second layers). Areal density of the produced sheets was 21 kg/m².

**Table 1: Composition of prepared panels**

| | Number of cross-plies of first layers | Number of second layers | % of second layers (*) |
|---|---|---|---|
| Comparative experiment A | 80 | 0 | 0% |
| Example I | 72 | 20 | 10% |
| Example II | 64 | 41 | 20% |
| Example III | 40 | 102 | 50% |

| | | | |
|---|---|---|---|
| (*) defined as the ratio of the areal density of second layers to the areal density of the total panel (x100%) | | | |

### Testing procedures

The produced panels were mechanically tested under bending and with respect to their antiballistic performance. For the bending tests a total of 10 samples were used for each data point. Prior to subjecting the samples to testing they were conditioned for 48 hours, at 23° C and 50% humidity. Three-point bending tests to obtain the flexural modulus were performed according to ISO 178.

Ballistic performance (specific energy absorption, SEA) was analysed by exposing two panels for each sample to an AK47 7.62*39mm MSC (manufactured by Mrs. Sellier & Bellot) threat at a predetermined speed, averaging 827 m/s. Energy absorption was calculated using areal density, bullet weight and speed.

### Results

The results of the tests are given in Table 2.

**Table 2: Results of the mechanical tests on the prepared panels of table 1.**

| | Flexural Modulus (MPa) | SEA (J/kg/m²) |
|---|---|---|
| Comparative experiment A | 1473 | 127 |
| Example I | 1756 | 138 |
| Example II | 1999 | 128 |
| Example III | 4205 | 119.5 |

The results indicate that the combination of first and second layers in the invented sheets leads to an increase in stiffness. This reduces trauma. Moreover, anti ballistic performance expressed as specific energy absorption (SEA) of the invented sheets is at least of the same level or higher than the energy absorbed by a sheet according to the state of the art.

In particular it can be observed that when the percentage of second layers in the stack is about or below 20%, a higher SEA for said stack was obtained in comparison with stacks containing a higher percentage of said second layers. It was also observed that the SEA of said stack decreased by increasing the amount of second layers above 20%. In particular, at about 50% second layers, the SEA of said stack was below the SEA of a stack containing only first layers. It can be concluded thus that the synergistic effect between the first and second layers is stronger for the above mentioned range of about or below 20% of second layers and decreases by increasing the amount thereof.

It was also observed that the stiffness of said stack was further increased by shifting the percentage of second layers towards higher percentages, e.g. 50%.

Ballistic resistant articles made from the stack are particularly advantageous over previously known ballistic resistant articles as they provide an improved level of protection compared to the known materials at a similar or lower weight.

## Claims

1. A panel comprising a consolidated stack, said stack comprising first and second layers, whereby the first layers comprise drawn polyethylene fibers and optionally a binder, and the second layers comprise drawn polyethylene tapes, whereby at least one of the first and/or second layers comprise a woven fabric of the drawn polyethylene fibers and/or the drawn polyethylene tapes, respectively, whereby the total areal density of second layers is between 1% and 50% of the total areal density of the stack.

2. A panel according to claim 1, wherein the first layers comprise drawn polyethylene fibers in parallel orientation, wherein the orientation of said fibers in adjacent first layers differs by an angle of between 20° and 160°

3. A panel according to any of the preceding claims, where in the stack a number of first and/or second layers are clustered.

4. A panel according to any of the preceding claims, whereby the volume percentage of drawn polyethylene fibers in the first layers is between 70% and 98%.

5. A panel according to any one of claims 1 to 4 wherein the polyethylene is a ultra high molecular weight polyethylene.

6. A panel according to any one of claims 1 to 5, whereby the first layers comprise drawn polyethylene fibers in parallel orientation embedded in a matrix.

7. A ballistic resistant article comprising the panel according to any one of the preceding claims.

8. A ballistic resistant article according to claim 7, whereby a number of second layers of the stack are clustered and whereby this cluster of second layers is positioned at the strike face.

## Patentansprüche

1. Platte, umfassend einen konsolidierten Stapel, wobei der Stapel erste und zweite Schichten umfasst, wobei die ersten Schichten gezogene Polyethylenfasern und gegebenenfalls ein Bindemittel umfassen und die zweiten Schichten gezogene Polyethylenbänder umfassen, wobei mindestens eine der ersten und/oder zweiten Schichten ein Gewebe aus den gezogenen Polyethylenfasern und/oder den gezogenen Polyethylenbändern umfasst, wobei die Gesamtflächendichte von zweiten Schichten zwischen 1% und 50% der Gesamtflächendichte des Stapels liegt.

2. Platte nach Anspruch 1, wobei die ersten Schichten gezogene Polyethylenfasern in paralleler Orientierung umfassen, wobei sich die Orientierung der Fasern in benachbarten ersten Schichten um einen Winkel zwischen 20° und 160° unterscheidet.

3. Platte nach einem der vorhergehenden Ansprüche, wobei in dem Stapel eine Reihe von ersten und/oder zweiten Schichten gebündelt sind.

4. Platte nach einem der vorhergehenden Ansprüche, wobei der Volumenprozentanteil von gezogenen Polyethylenfasern in den ersten Schichten zwischen 70% und 98% liegt.

5. Platte nach einem der Ansprüche 1 bis 4, wobei es sich bei dem Polyethylen um ein ultrahochmolekulares Polyethylen handelt.

6. Platte nach einem der Ansprüche 1 bis 5, wobei die ersten Schichten gezogene Polyethylenfasern in paralleler Orientierung, die in eine Matrix eingebettet sind, umfassen.

7. Ballistikschutzgegenstand, umfassend die Platte nach einem der vorhergehenden Ansprüche.

8. Ballistikschutzgegenstand nach Anspruch 7, wobei eine Reihe von zweiten Schichten des Staples gebündelt sind und wobei dieses Bündel von zweiten Schichten aufschlagseitig positioniert ist.

## Revendications

1. Panneau comprenant une pile consolidée, ladite pile comprenant des premières et deuxièmes couches, les premières couches comprenant des fibres polyéthylènes étirées et éventuellement un liant, et les deuxièmes couches comprenant des rubans polyéthylènes étirés, au moins une des premières et/ou deuxièmes couches comprenant un tissu tissé constitué des fibres polyéthylènes étirées et/ou des rubans polyéthylènes étirés respectivement, la densité surfacique totale des deuxièmes couches étant de 1 % à 50 % de la densité surfacique totale de la pile.

2. Panneau selon la revendication 1, dans lequel les premières couches comprennent des fibres polyéthylènes étirées dans une orientation parallèle, l'orientation desdites fibres dans des premières couches adjacentes différant selon un angle de 20 ° à 160°.

3. Panneau selon l'une quelconque des revendications précédentes, dans lequel plusieurs premières et/ou deuxièmes couches dans la pile sont groupées.

4. Panneau selon l'une quelconque des revendications précédentes, dans lequel le pourcentage volumique de fibres polyéthylènes étirées dans les premières couches est de 70 % à 98 %.

5. Panneau selon l'une quelconque des revendications 1 à 4, dans lequel le polyéthylène est un polyéthylène à ultra-haute masse moléculaire.

6. Panneau selon l'une quelconque des revendications 1 à 5, dans lequel les premières couches comprennent des fibres polyéthylènes étirées dans une orientation parallèle noyées dans une matrice.

7. Article pare-balles comprenant le panneau selon l'une quelconque des revendications précédentes.

8. Article pare-balles selon la revendication 7, dans lequel plusieurs deuxièmes couches de la pile sont groupées, ce groupe de deuxièmes couches étant positionné au niveau de la face qui reçoit l'impact.
